# EUROPEAN PATENT SPECIFICATION

(11) **EP 4 528 123 B1**
(45) Date of publication and mention of the grant of the patent: **25.11.2026**
(21) Application number: 25155601.5
(22) Date of filing: 09.01.2019
(51) Int. Cl.: F16D 23/12, F16D 13/56

(54) **POWER TRANSMISSION DEVICE**
KRAFTÜBERTRAGUNGSVORRICHTUNG
DISPOSITIF DE TRANSMISSION DE PUISSANCE

(30) Priority: 11.01.2018 JP 2018002703
(43) Date of publication of application: 26.03.2025
(62) Document number(s) of the earlier application(s) in accordance with Art. 76 EPC: 23214354.5 / 4 310 355; 19738506.5 / 3 739 231
(73) Proprietor: Kabushiki Kaisha F.C.C., Hamamatsu-shi, Shizuoka 431-1394 (JP)
(72) Inventor: Nishikawa, Junichi, Hamamatsu-shi, 431-1304 (JP); Yoshimoto, Katsu, Hamamatsu-shi, 431-1304 (JP); Chen, Han Hiong, Hamamatsu-shi, 431-1304 (JP); Ozawa, Yoshihiko, Hamamatsu-shi, 431-1304 (JP)
(74) Representative: Grünecker Patent- und Rechtsanwälte PartG mbB

(56) References cited:
- EP-A1- 2 530 348
- US-A1- 2014 326 570
- US-A1- 2014 353 108

## Description

### Technical Field

The present invention relates to a power transmission device that is capable of appropriately transmitting or cutting off rotational power of an input member to an output member.

### Background Art

US 2014/353 108 A1 discloses a power transmission device at least not having the features of the characterizing portion of claim 1.

In general, a motorcycle has a power transmission device for appropriately transmitting or cutting off driving power of an engine to a transmission and a driving wheel. The power transmission device includes an input member coupled to the engine side, an output member coupled to the transmission and driving wheel side, a clutch member coupled to an output member, and a pressure member that is capable of pressing clutch plates (drive-side clutch plates and driven-side clutch plates) against each other or releasing a press-contact force. The power transmission device is configured to transmit power by pressing the drive-side clutch plates and the driven-side clutch plates against each other and to cut off power by releasing the press-contact force.

For example, in a power transmission device disclosed in PTL 1, a receiving member is attached to the pressure member, and a clutch spring (urging means) contained in the receiving member urges the pressure member in a direction such that the drive-side clutch plates and the driven-side clutch plates are pressed against each other. One cam surface is formed in the receiving member, and the other cam surface, which faces the one cam surface, is formed in the clutch member. These cam surfaces constitute a back-torque limiting cam that reduces the press-contact force between the drive-side clutch plates and the driven-side clutch plates if the pressure member and the clutch member rotate relative to each other when the rotation speed of the output member exceeds the rotation speed of the input member.

That is, if the pressure member and the clutch member rotate relative to each other when the rotation speed of the output member exceeds the rotation speed of the input member, the one cam surface and the other cam surface slide over each other and the back-torque limiting cam functions to move the receiving member in the axial direction relative to the pressure member. Thus, the urging force of the clutch spring applied to the pressure member decreases, so that the press-contact force between the drive-side clutch plates and the driven-side clutch plates is reduced.

### Citation List

### Patent Literature

PTL 1: International Publication No. WO2016/024557

### Summary of Invention

### Technical Problem

However, in the existing power transmission device described above, when a clutch lever or the like is operated to separate the pressure member from the clutch member to disengage the clutch (release the press-contact force between the clutch plate), the pressure member may rotate relative to the clutch member, and one cam surface and the other cam surface of the torque limiter cam may make contact with each other and the receiving member may become stuck.

If the clutch is being reengaged (the clutch plates are pressed against each other again) in such a state, it may be difficult for the receiving member to return to the original position due to the edge effect between the one cam surface and the other cam surface. Such a problem arises not only in a device that includes the receiving member separately from the pressure member but also in a device in which one cam surface is integrally formed in the pressure member.

The present invention is defined in claim 1.

### Brief Description of Drawings

[Fig. 1] Fig. 1 is an overall longitudinal sectional view of a power transmission device according to a first embodiment of the present invention.
[Fig. 2] Fig. 2 is a perspective view of the power transmission device in a state in which a clutch housing and the like are removed.
[Fig. 3] Fig. 3 is a plan view of the power transmission device in a state in which the clutch housing and the like are removed.
[Fig. 4] Fig. 4 is a cutaway view taken along line IV-IV in Fig. 3 .
[Fig. 5] Fig. 5 is a perspective view of a clutch member of the power transmission device.
[Fig. 6] Fig. 6 is a plan view of the clutch member.
[Fig. 7] Fig. 7 is a rear view of the clutch member.
[Fig. 8] Fig. 8 is a perspective view of a pressure member of the power transmission device as seen from one side.
[Fig. 9] Fig. 9 is a perspective view of the pressure member as seen from the other side.
[Fig. 10] Fig. 10 is a back view of the pressure member.
[Fig. 11] Fig. 11 is a plan view of the pressure member.
[Fig. 12] Fig. 12 is a perspective view of a receiving member of the power transmission device as seen from one side.
[Fig. 13] Fig. 13 is a perspective view of the receiving member as seen from the other side.
[Fig. 14] Fig. 14 shows a plan view and a rear view of the receiving member.
[Fig. 15] Fig. 15 is a sectional view taken along line XV-XV in Fig. 14 .
[Fig. 16] Fig. 16 is a perspective view of a fixing member of the power transmission device as seen from one side.
[Fig. 17] Fig. 17 is a perspective view of the fixing member as seen from the other side.
[Fig. 18] Fig. 18 is a developed view illustrating cam surfaces of the power transmission device (when the vehicle is accelerating and the clutch is engaged).
[Fig. 19] Fig. 19 is a developed view illustrating the cam surfaces of the power transmission device (when the vehicle is decelerating and the clutch is engaged).
[Fig. 20] Fig. 20 is a developed view illustrating the cam surfaces of the power transmission device (when the vehicle is decelerating and the clutch is disengaged).
[Fig. 21] Fig. 21 is a plan view of a power transmission device according to a second embodiment of the present invention in a state in which a clutch housing and the like are removed.
[Fig. 22] Fig. 22 is a cutaway view taken along line XXII-XXII in Fig. 21 .
[Fig. 23] Fig. 23 is a developed view illustrating cam surfaces of the power transmission device (when the vehicle is accelerating and the clutch is engaged).
[Fig. 24] Fig. 24 is a developed view illustrating the cam surfaces of the power transmission device (when the vehicle is decelerating and the clutch is engaged).
[Fig. 25] Fig. 25 is a developed view illustrating the cam surfaces of the power transmission device (when the vehicle is decelerating and the clutch is disengaged).
[Fig. 26] Fig. 26 is plan view of a power transmission device according to a third embodiment of the present invention in a state in which a clutch housing and the like are removed.
[Fig. 27] Fig. 27 is a cutaway view taken along line XXVII-XXVII in Fig. 26 .
[Fig. 28] Fig. 28 is a developed view illustrating cam surfaces of the power transmission device (when the vehicle is accelerating and the clutch is engaged).
[Fig. 29] Fig. 29 is a developed view illustrating the cam surfaces of the power transmission device (when the vehicle is decelerating and the clutch is engaged).
[Fig. 30] Fig. 30 is a developed view illustrating the cam surfaces of the power transmission device (when the vehicle is decelerating and the clutch is disengaged).

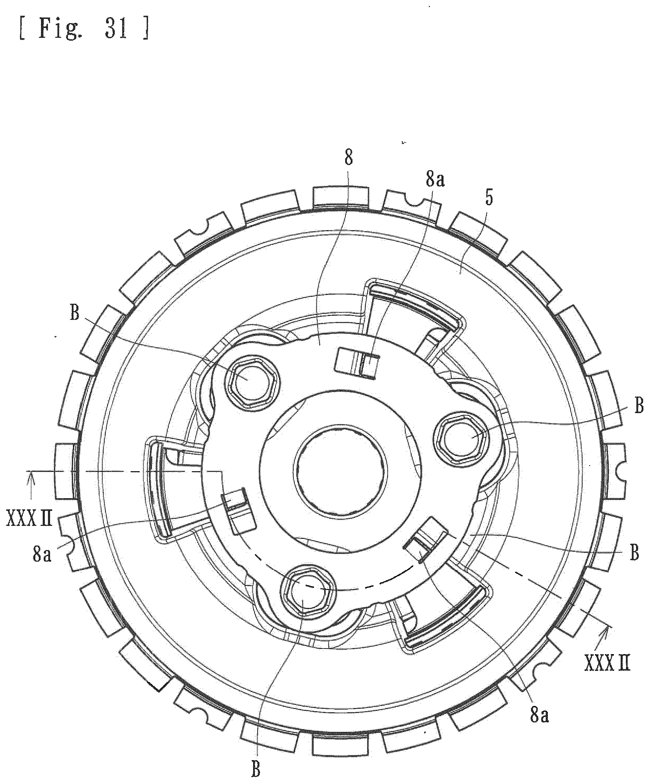

[Fig. 31] Fig. 31 is a plan view of a power transmission device according to a fourth embodiment of the present invention in a state in which a clutch housing and the like are removed.
[Fig. 32] Fig. 32 is a cutaway view taken along line XXXII-XXXII in Fig. 31 .
[Fig. 33] Fig. 33 is a developed view illustrating cam surfaces of the power transmission device (when the vehicle is accelerating and the clutch is engaged).
[Fig. 34] Fig. 34 is a developed view illustrating the cam surfaces of the power transmission device (when the vehicle is decelerating and the clutch is engaged).
[Fig. 35] Fig. 35 is a developed view illustrating the cam surfaces of the power transmission device (when the vehicle is decelerating and the clutch is disengaged).

### Description of Embodiments

Hereafter, embodiments of the present invention will be described in detail with reference to the drawings.

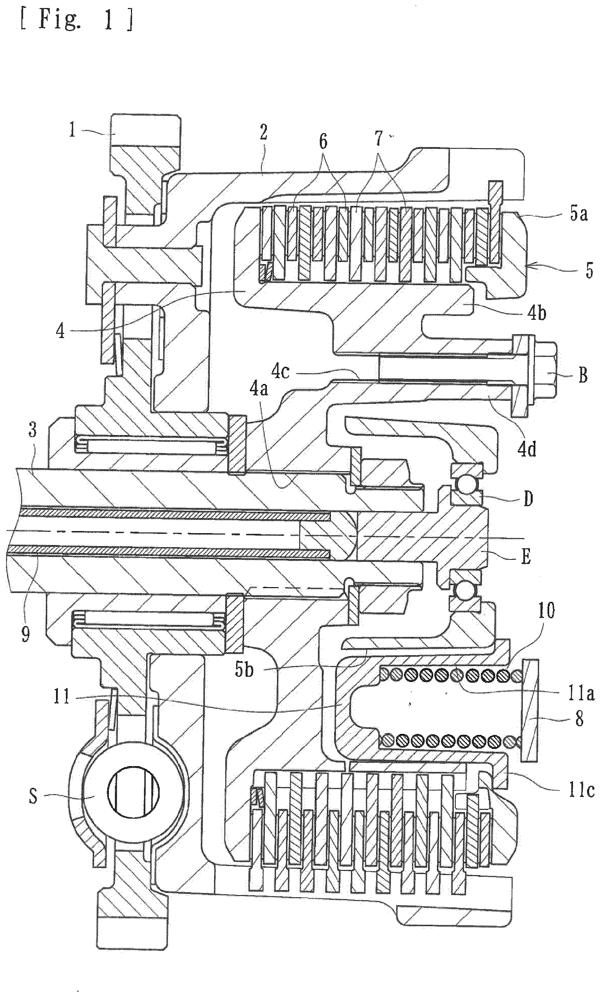

A power transmission device according to the present embodiment is disposed in a vehicle, such as a motorcycle, and appropriately transmits or cuts off driving power of an engine to the transmission and driving wheel side. As illustrated in Fig. 1 , the power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. In the figure, the symbol S represents a damper, and the symbol D represents a ball bearing.

The gear 1 can rotate around the shaft 3 when driving power (rotational power) transmitted from the engine is input. The gear 1 is coupled to the clutch housing 2 by using rivets and the like. The clutch housing 2 is constituted by a cylindrical case member whose right end side in the figure is open. A plurality of drive-side clutch plates 6 are attached to the inner peripheral wall of the clutch housing 2. Each of the drive-side clutch plates 6 is constituted by a substantially annular plate, is fitted into a spline formed in the inner peripheral surface of the clutch housing 2, and thus is configured to be rotatable together with rotation of the clutch housing 2 and slidable in the axial direction (left-right directions in Fig. 1 ).

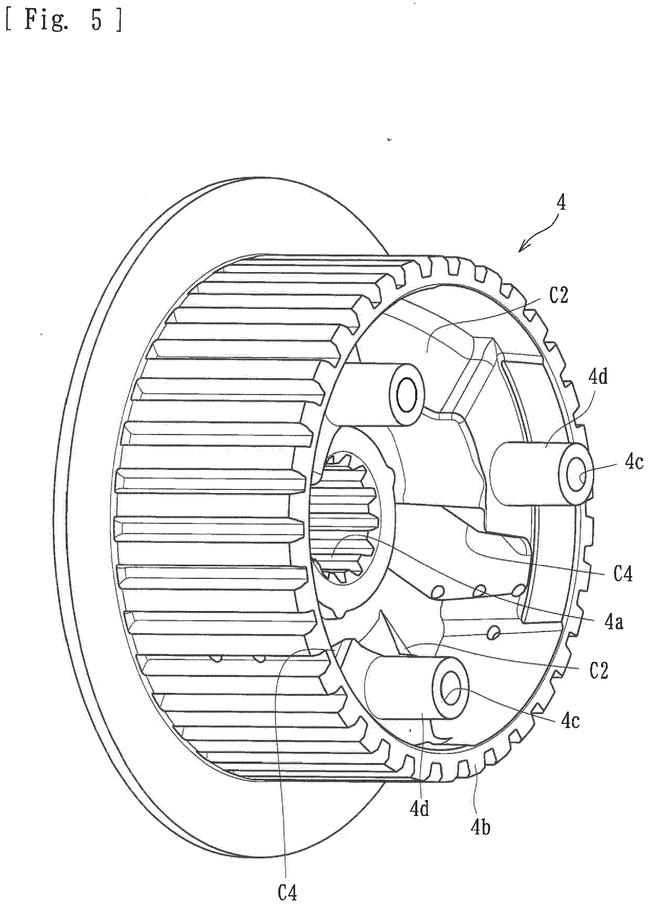

The clutch member 4 is constituted by members disposed in the clutch housing 2. As illustrated in Figs. 5 to 7 , the clutch member 4 includes a central hole 4a through which the shaft 3 can be inserted, an outer peripheral wall 4b in which splines are formed, bolt holes 4c through which bolts B can be inserted, and boss portions 4d in which the bolt holes 4c are formed. Splines are formed in each of the inner peripheral surface of the central hole 4a and the outer peripheral surface of the shaft 3. The shaft 3 is spline-fitted and coupled to the central hole 4a, so that the shaft 3 also rotates when the clutch member 4 rotates. The driven-side clutch plates 7 are fitted and attached to the splines formed in the outer peripheral wall 4b.

To be more specific, the splines, which are formed in the outer peripheral wall 4b of the clutch member 4, are composed of protrusions and recesses that are integrally formed around substantially the entire periphery of the outer peripheral wall 4b. Because the driven-side clutch plates 7 engage with recessed grooves of the splines, movement of the driven-side clutch plates 7 in the rotational direction is restricted while movement of the driven-side clutch plates 7 relative to the clutch member 4 in the axial direction is allowed, and the driven-side clutch plates 7 can rotate together with the clutch member 4.

The driven-side clutch plates 7 are formed so as to be stacked alternately with the drive-side clutch plates 6. The drive-side clutch plates 6 and the driven-side clutch plates 7 that are adjacent to each other can be pressed against each other or the press-contact force can be released. That is, the drive-side clutch plates 6 and the driven-side clutch plates 7 are allowed to slide in the axial direction of the clutch member 4. When pressed by the pressure member 5 in the leftward direction in Fig. 1 , the drive-side clutch plates 6 and the driven-side clutch plates 7 are pressed against each other, so that the rotational power of the clutch housing 2 can be transmitted to the shaft 3 via the clutch member 4. When pressing by the pressure member 5 is relieved, the press-contact force is released, the clutch member 4 stops following the rotation of the clutch housing 2 and stops, so that rotational power is not transmitted to the shaft 3.

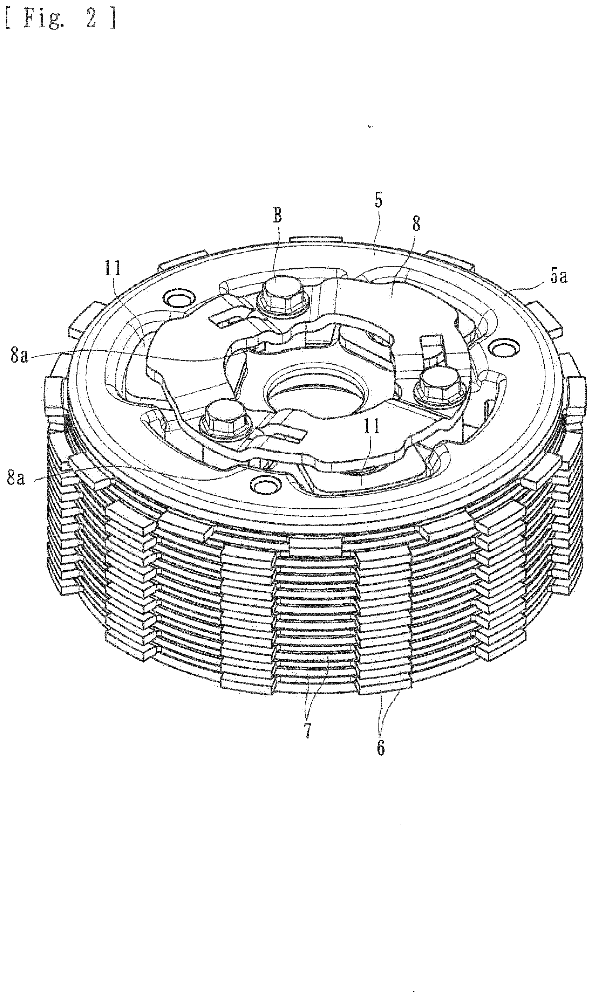

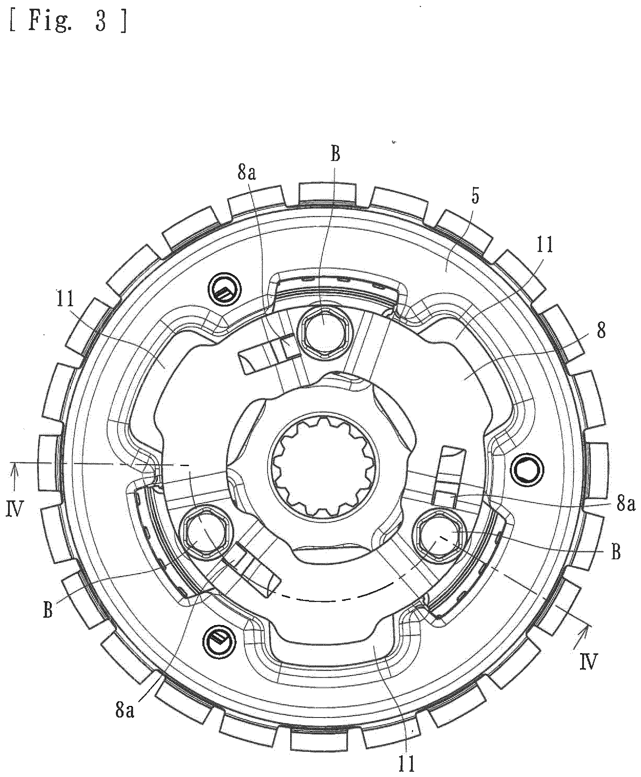

Moreover, as illustrated in Figs. 2 to 4 , the fixing member 8 is fixed to the tip- end side of the boss portions 4d by using the bolts B, which are inserted through the bolt holes 4c. The clutch springs 10 as urging means are attached to the fixing member 8. To be specific, the fixing member 8 is constituted by an annular metal member, is fixed to the tip ends of the boss portions 4d by using the bolts B, and is mounted in such a way that the receiving members 11 are positioned between the bolts B and the other end portions of the clutch springs 10 are in contact therewith.

Each of the clutch spring 10 is constituted by a coil spring that is mounted in such a way that, in a state of being contained in the receiving member 11, one end thereof is in contact with the bottom surface side of the receiving member 11 (to be specific, a receiving portion 11b described below) and the other end thereof is in contact with the fixing member 8. The clutch spring 10 can constantly urge the pressure member 5 in a direction such that the drive-side clutch plates 6 and the driven-side clutch plates 7 are pressed against each other (that is, a direction such that the pressure member 5 becomes closer to the clutch member 4). Another urging means may be used as the clutch spring 10.

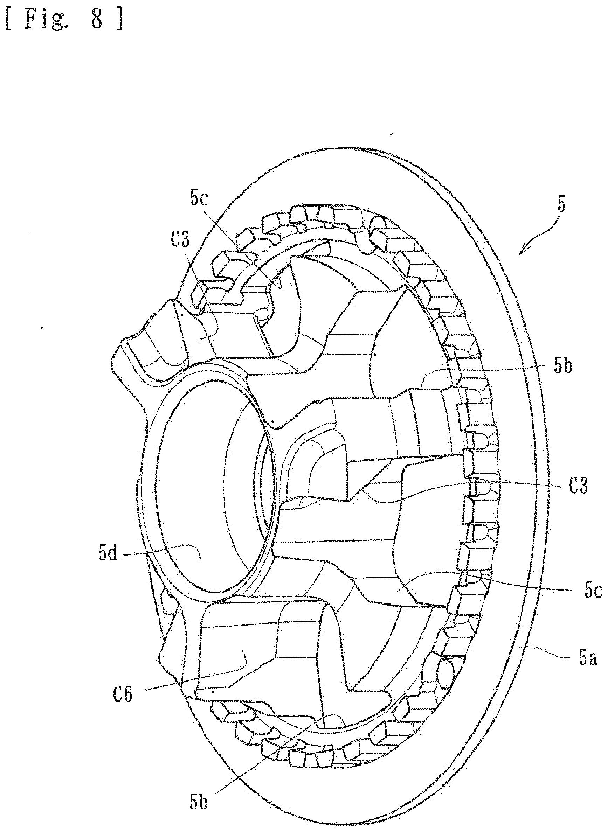

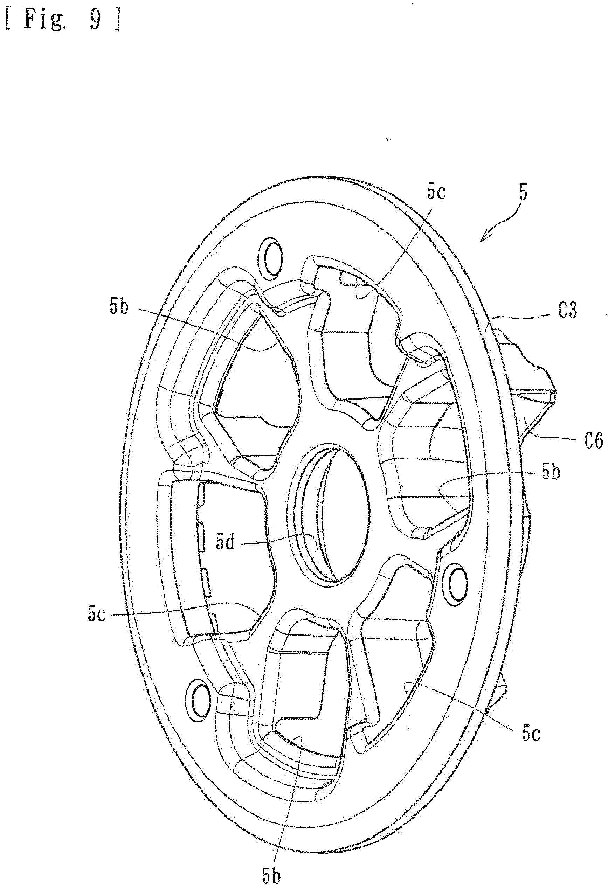

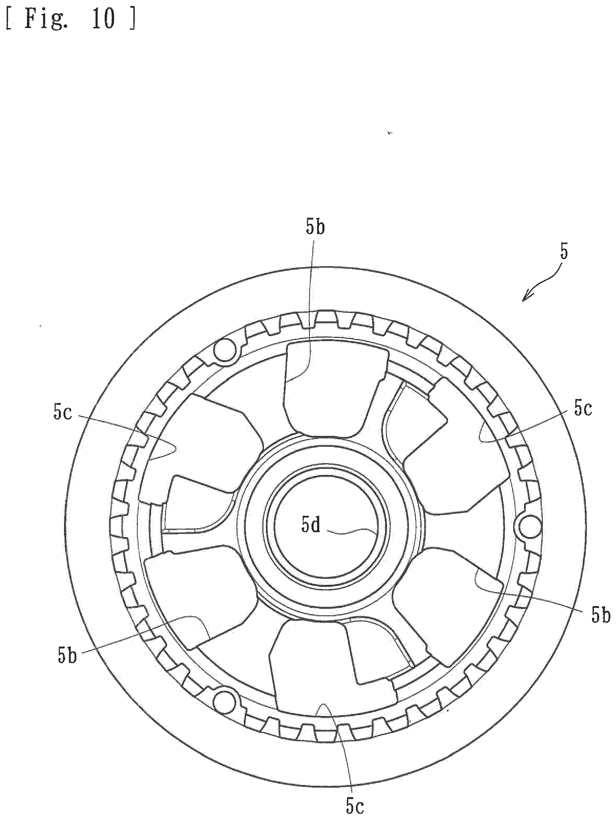

The pressure member 5 is attached to the clutch member 4 at a position on the right end side in Fig. 1 in such a way that the pressure member 5 is movable in the axial direction of the clutch member 4 (left-right directions in Fig. 1 ). The pressure member 5 can press the drive-side clutch plates 6 and the driven-side clutch plates 7 against each other or release the press-contact force in accordance with movement thereof relative to the clutch member 4 in the axial direction. To be more specific, as illustrated in Figs. 8 to 11 , the pressure member 5 includes a flange portion 5a that can press the drive-side clutch plates 6 and the driven-side clutch plates 7 against each other, attachment holes 5b for attaching the receiving members 11, through-holes 5c, and a central hole 5d.

Among these, to the central hole 5d of the pressure member 5, a pressed member E is attached via the ball bearing D as illustrated in Fig. 1 . The pressed member E is attached to the tip end side of the shaft 3 and is movable so as to follow the push rod 9. When a driver operates operation means, such as a clutch lever or the like (not shown), to cause the push rod 9 to protrude in the rightward direction in the figure, the pressed member E moves in the same direction. Thus, the pressure member 5 can be moved in the rightward direction in Fig. 1 (direction away from the clutch member 4) against the urging forces of the clutch springs 10.

When the pressure member 5 moves in the rightward direction, the press-contact force between the drive-side clutch plates 6 and the driven-side clutch plates 7 is released, and rotational power input to the gear 1 and the clutch housing 2 is cut off and not transmitted to the clutch member 4 and the shaft 3 (clutch is disengaged). When the driver stops operating the operation means, the pressure member 5 moves in the leftward direction in Fig. 1 due to the urging forces of the clutch springs 10, and the drive-side clutch plates 6 and the driven-side clutch plates 7 are pressed against each other. Thus, rotational power input to the gear 1 and the clutch housing 2 is transmitted to the clutch member 4 and the shaft 3 (clutch is engaged).

That is, the pressure member 5 is configured to be capable of pressing the drive-side clutch plates 6 and the driven-side clutch plates 7 against each other or releasing the press-contact force in accordance with movement thereof relative to the clutch member 4 in the axial direction. The push rod 9 and the pressed member E, which are activated by an operation performed by a driver and which can release the press-contact force between the drive-side clutch plates 6 and the driven-side clutch plates 7 by moving the pressure member 5 against the urging force of the clutch spring 10 (urging means) as described above, constitute "activation means" of the present invention.

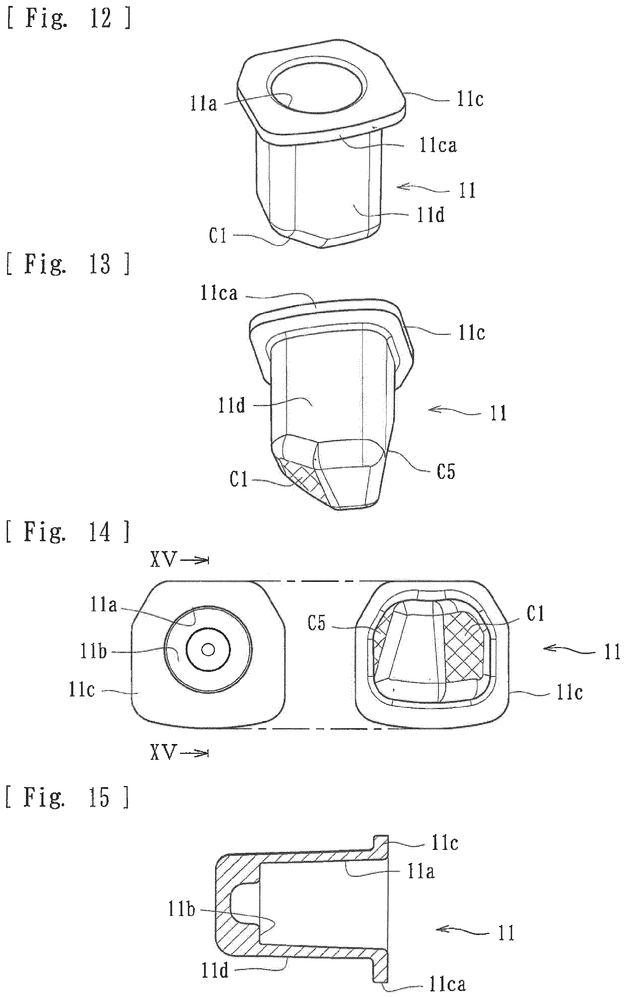

Moreover, the attachment holes 5b are formed in the pressure member 5 at a plurality of (three) positions on the same circle at regular intervals, and the receiving member 11 is attached to each of the attachment holes 5b. The receiving member 11, which is attached to the attachment hole 5b of the pressure member 5, can make contact with one end of the clutch spring 10 and receive the urging force thereof, and is separate from the pressure member 5. To be specific, as illustrated in Figs. 12 to 15 , the receiving member 11 according to the present embodiment is constituted by a cup-shaped member that includes: a recessed portion 11a that contains the clutch spring 10, the receiving portion 11b that is formed in the recessed portion 11a and that makes contact with one end portion of the clutch spring 10 and receives the urging force, and a flange portion 11c that makes contact with the pressure member 5 and that can transmit the urging force of the clutch spring 10 to the pressure member 5.

Among these, the flange portion 11c is formed on the opening side of the receiving member 11. When the receiving member 11 is attached to the attachment hole 5b, the flange portion 11c makes contact with the opening edge of the attachment hole 5b. After attaching the receiving member 11 to the attachment hole 5b, by mounting the clutch spring 10 into the recessed portion 11a in such a way that one end portion thereof is in contact with the receiving portion 11b, the urging force of the clutch spring 10 is transmitted to the pressure member 5 side via the flange portion 11c of the receiving members 11, and the drive-side clutch plates 6 and the driven-side clutch plates 7 can be pressed against each other by using the transmitted urging force.

Moreover, the power transmission device according to the present embodiment includes: a press-contact assisting cam that can increase the press-contact force between the drive-side clutch plates 6 and the driven-side clutch plates 7 if the pressure member 5 and the clutch member 4 rotate relative to each other when rotational power input to the gear 1 as an input member becomes capable of being transmitted to the shaft 3 as an output member; and a back-torque limiting cam that reduces the press-contact force between the drive-side clutch plates 6 and the driven-side clutch plates 7 if the pressure member 5 and the clutch member 4 rotate relative to each other when the rotation speed of the shaft 3 as an output member exceeds the rotation speed of the gear 1 as an input member. Cam surfaces (first to sixth cam surfaces C 1 to C6) that constitute the press-contact assisting cam and the back-torque limiting cam are shown by shading (cross-hatching) in the figures.

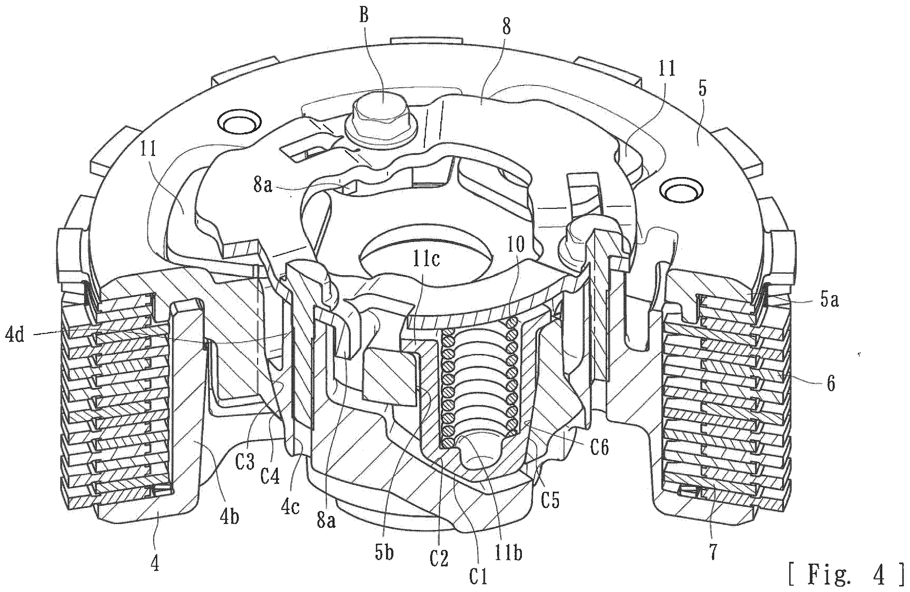

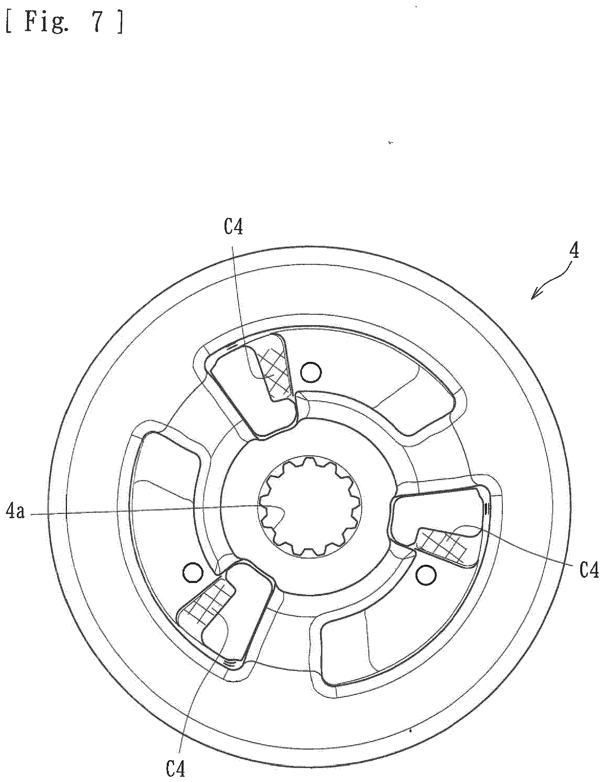

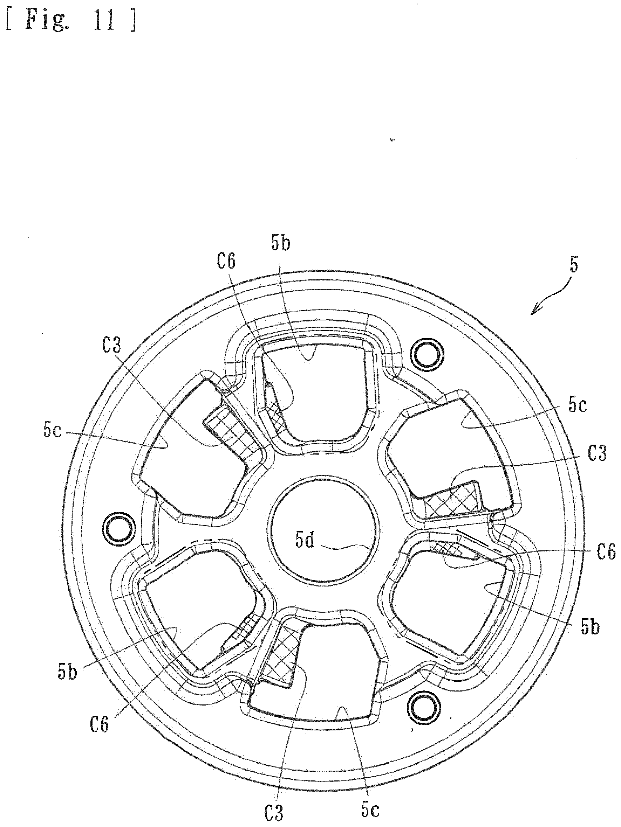

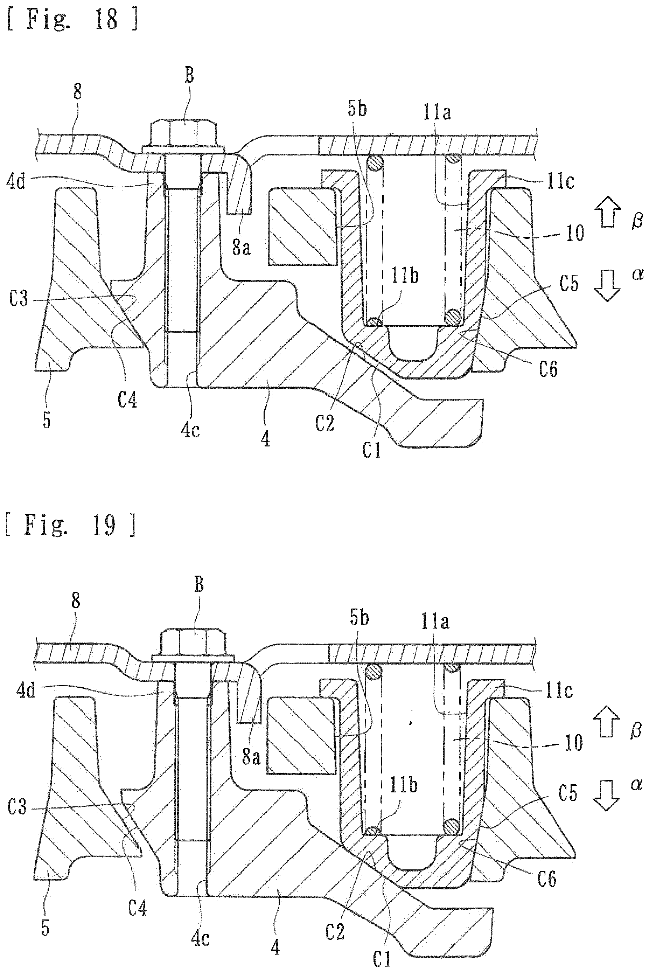

As illustrated in Figs. 4 and 18 , the press-contact assisting cam according to the present embodiment is configured by disposing the third cam surfaces C3 and the fourth cam surfaces C4, which are respectively formed in the pressure member 5 and the clutch member 4, so as to face each other. That is, when assembling the clutch member 4 and the pressure member 5 together, the third cam surfaces C3 (see Fig. 11 ) formed in the pressure member 5 and the fourth cam surfaces C4 (see Fig. 7 ) formed in the clutch member 4 are disposed so as to face each other. Thus, if the pressure member 5 and the clutch member 4 rotate relative to each other when rotational power input to the gear 1 becomes capable of being transmitted to the shaft 3, the pressure member 5 is moved in the direction α in Fig. 18 by the cam function of the third cam surfaces C3 and the fourth cam surfaces C4 so that the pressure member 5 becomes closer to the clutch member 4, and thereby the press-contact force between the drive-side clutch plates 6 and the driven-side clutch plates 7 is increased.

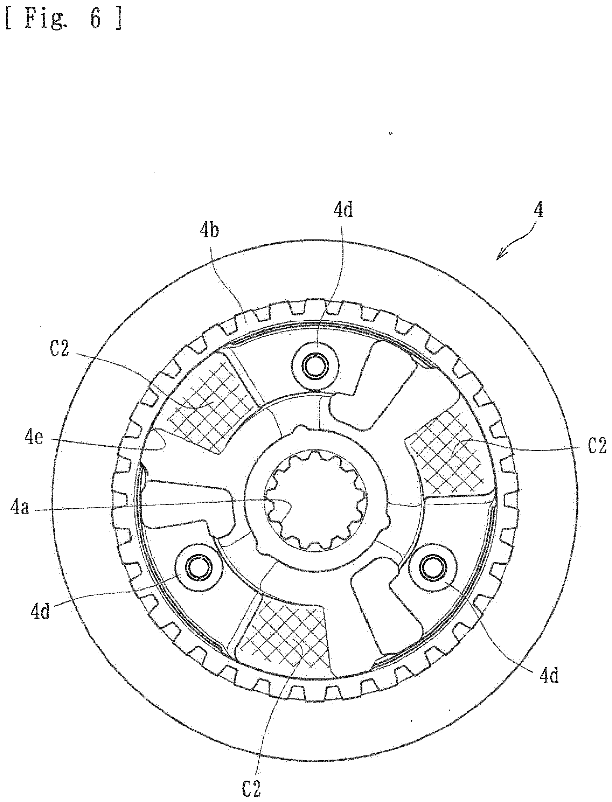

As illustrated in Figs. 4 and 19 , the back-torque limiting cam according to the present embodiment is configured by disposing the first cam surfaces C 1 and the second cam surfaces C2, which are respectively formed in the receiving members 11 and the clutch member 4, so as to face each other. That is, when assembling the clutch member 4, the pressure member 5, and the receiving members 11 together, the first cam surfaces C1 (see Figs. 13 and 14 ) formed in the bottom side surfaces of the receiving members 11 and the second cam surfaces C2 (see Fig. 6 ) formed in the clutch member 4 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 19 by the cam function of the first cam surfaces C1 and the second cam surfaces C2 so as to reduce the urging force of the clutch springs 10 transmitted to the pressure member 5, and thereby the press-contact force between the drive-side clutch plates 6 and the driven-side clutch plates 7 is reduced. Reduction of the press-contact force refers to a state in which rotational-power transmitting capacity is reduced due to sliding of the drive-side clutch plates 6 and the driven-side clutch plates 7 over each other.

Moreover, as illustrated in Fig. 14 , in each of the receiving members 11 according to the present embodiment, the fifth cam surface C5 is formed on a side opposite from the first cam surface C1; and the sixth cam surfaces C6 (see Fig. 11 ), each of which faces the fifth cam surface C5, is formed in the pressure member 5. That is, in both side surfaces of the bottom portion of each of the receiving members 11, the first cam surface C1 and the fifth cam surface C5 are respectively formed; and the back-torque limiting cam is constituted by the first cam surfaces C1, the second cam surfaces C2, the fifth cam surfaces C5, and the sixth cam surfaces C6.

When assembling the clutch member 4, the pressure member 5, and the receiving members 11 together, the first cam surfaces C1 formed in the receiving members 11 and the second cam surfaces C2 formed in the clutch member 4 are disposed so as to face each other, and the fifth cam surfaces C5 formed in the receiving members 11 and the sixth cam surfaces C6 formed in the pressure member 5 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 19 by the cam function of the first cam surfaces C1 and the second cam surfaces C2 and the cam function of the fifth cam surfaces C5 and the sixth cam surfaces C6, and thereby the press-contact force between the drive-side clutch plates 6 and the driven-side clutch plates 7 is reduced.

Thus, when the back-torque limiting cam functions, the receiving members 11 receive both of the cam function of the first cam surfaces C1 and the second cam surfaces C2 and the cam function of the fifth cam surfaces C5 and the sixth cam surfaces C6. Although the back-torque limiting cam according to the present embodiment includes the fifth cam surfaces C5 and the sixth cam surfaces C6, in addition to the first cam surfaces C1 and the second cam surfaces C2, the back-torque limiting cam may have only the first cam surfaces C1 and the second cam surfaces C2.

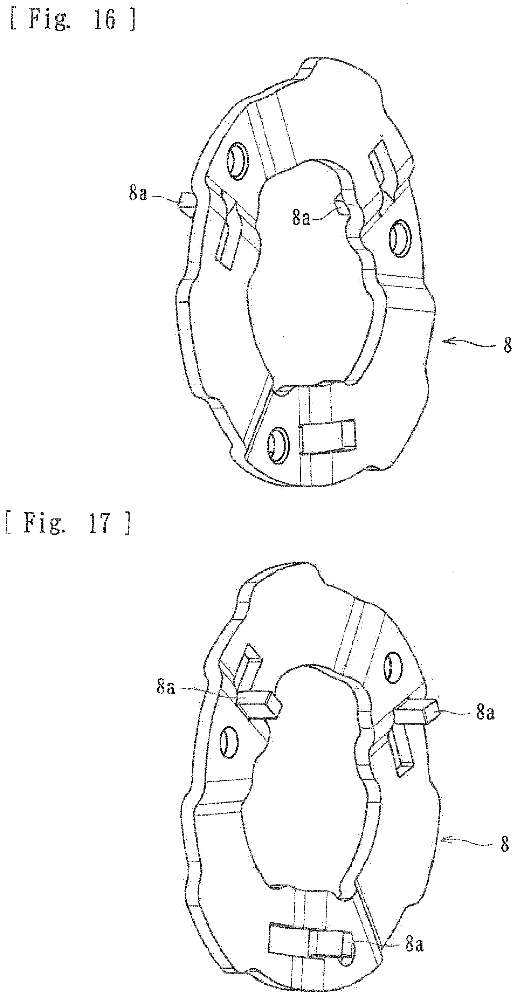

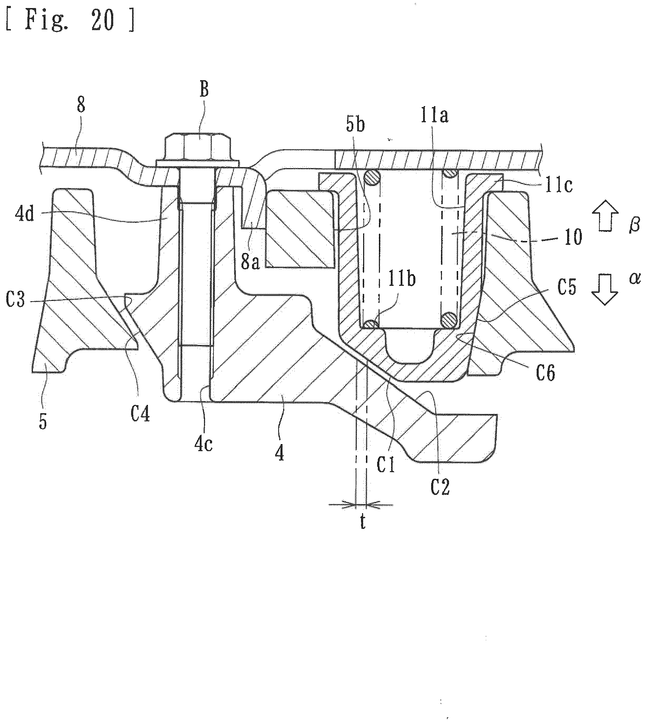

Here, the power transmission device according to the present embodiment includes a rotation restricting portion 8a that is capable of restricting rotation, relative to the clutch member 4, of the pressure member 5 that has moved due to activation of the push rod 9 and the pressed member E (activation means) and is capable of maintaining the clearance t (see Fig. 20 ) between a pair of cam surfaces (the first cam surface C1 and the second cam surface C2) that constitute a back-torque limiting cam. To be specific, as illustrated in Figs. 16 and 17 , the rotation restricting portion 8a according to the present embodiment is formed by bending a predetermined part of the fixing member 8.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 20 , the pressure member 5 interferes with the rotation restricting portion 8a and movement of the pressure member 5 in the direction is restricted, and the clearance between t between the first cam surface C1 and the second cam surface C2, which constitute the back-torque limiting cam, is maintained. Thus, the rotation restricting portion 8a is configured to be capable of preventing the pressure member 5 from rotating and the receiving member 11 from becoming stuck onto the second cam surface C2 when the activation means (the push rod 9 and the pressed member E) are activated.

The present embodiment includes the rotation restricting portion 8a that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Moreover, the rotation restricting portion 8a according to the present embodiment is formed in a predetermined part of the fixing member 8 (in particular, integrally formed by bending a predetermined part of the fixing member 8). Therefore, by performing replacement to the fixing member 8 having the rotation restricting portion 8a in an existing power transmission device, it is possible to restrict rotation of the pressure member 5 when a driver disengages the clutch, and it is possible to improve responsiveness when the driver subsequently engages the clutch and to improve operability.

Next, a power transmission device according to a second embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. Elements that are the same as those of the first embodiment will be denoted by the same numerals, and detailed descriptions of such elements will be omitted.

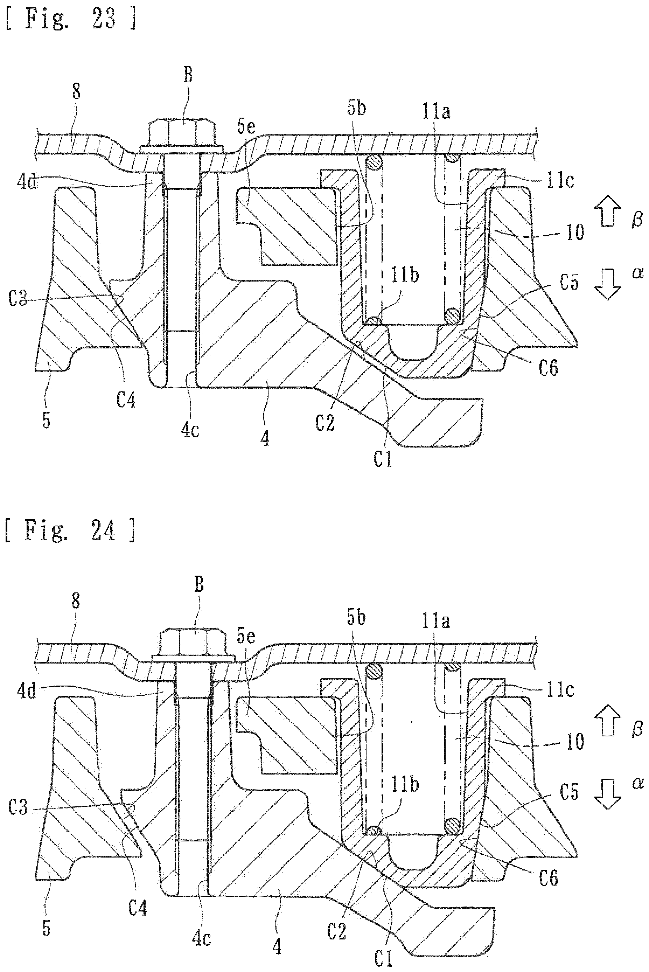

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 23 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4, the pressure member 5, and the receiving members 11 together, the first cam surfaces C1 formed in the bottom side surfaces of the receiving members 11 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the receiving members 11 are moved in the direction β in Fig. 24 by the cam function of the first cam surfaces C1 and the second cam surfaces C2 so as to reduce the urging force of the clutch springs 10 transmitted to the pressure member 5; and thereby the press-contact force between the drive-side clutch plates 6 and the driven-side clutch plates 7 is reduced.

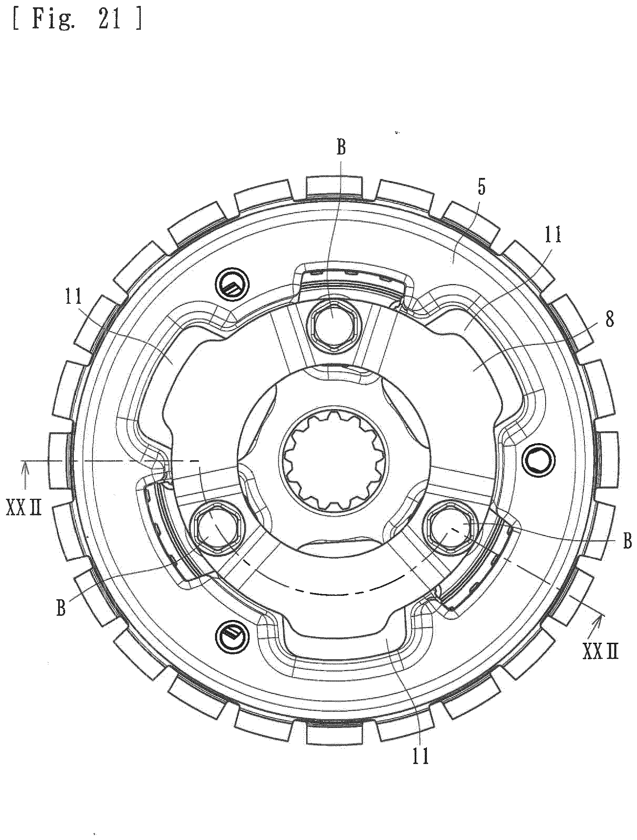

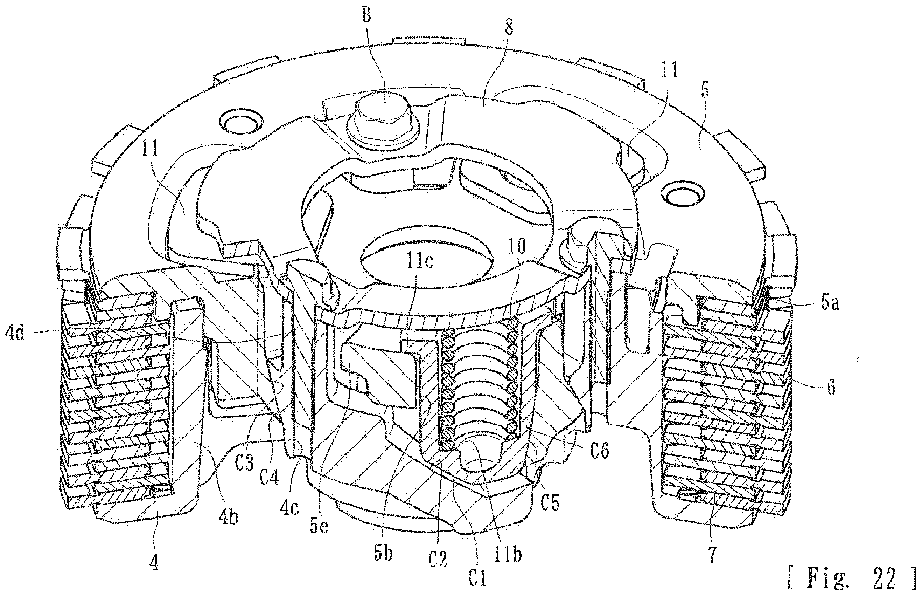

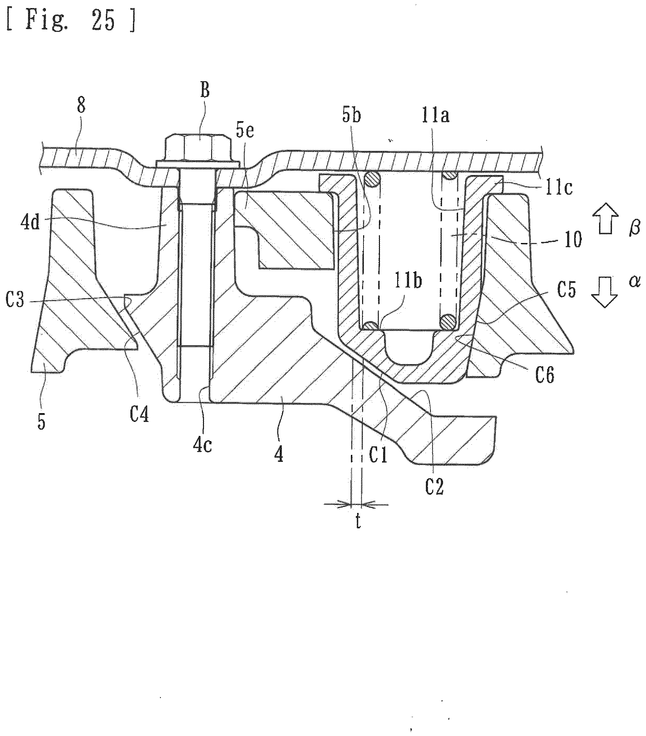

Here, as illustrated in Figs. 21 and 22 , a rotation restricting portion 5e is integrally formed in a predetermined part of the pressure member 5 according to the present embodiment. The rotation restricting portion 5e is capable of restricting rotation, relative to the clutch member 4, of the pressure member 5 that has moved due to activation of the push rod 9 and the pressed member E (activation means) and is capable of maintaining the clearance t (see Fig. 25 ) between a pair of cam surfaces (the first cam surface C1 and the second cam surface C2) that constitute the back-torque limiting cam. As illustrated in Fig. 22, the rotation restricting portion 5e is formed by causing a predetermined part of the pressure member 5 to protrude in the rotation direction of the pressure member 5.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 25 , the rotation restricting portion 5e formed in the pressure member 5 interferes with the boss portion 4d of the clutch member 4 and movement of the pressure member 5 in the direction is restricted, and the clearance t between the first cam surface C1 and the second cam surface C2, which constitute the back-torque limiting cam, is maintained. Thus, the rotation restricting portion 5e is configured to be capable of preventing the pressure member 5 from rotating and the receiving member 11 from becoming stuck onto the second cam surface C2 when the activation means (the push rod 9 and the pressed member E) are activated. A part that interferes with the rotation restricting portion 5e is not limited to the boss portion 4d of the clutch member 4, and may be another part (including a separately and newly formed part).

The present embodiment includes the rotation restricting portion 5e that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Furthermore, the rotation restricting portion 5e according to the present embodiment is formed in a predetermined part of the pressure member 5, and the rotation restricting portion 5e formed in the pressure member 5 that has moved due to activation of activation means (the push rod 9 and the pressed member E) interferes with the boss portion 4d of the clutch member 4 and restricts rotation of the pressure member 5. Therefore, by partially changing the shape of the pressure member 5, it is possible to restrict rotation of the pressure member 5 when a driver disengages the clutch, and it is possible to improve responsiveness when the driver subsequently engages the clutch and to improve operability.

Next, a power transmission device according to a third embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. Elements that are the same as those of the first embodiment will be denoted by the same numerals, and detailed descriptions of such elements will be omitted.

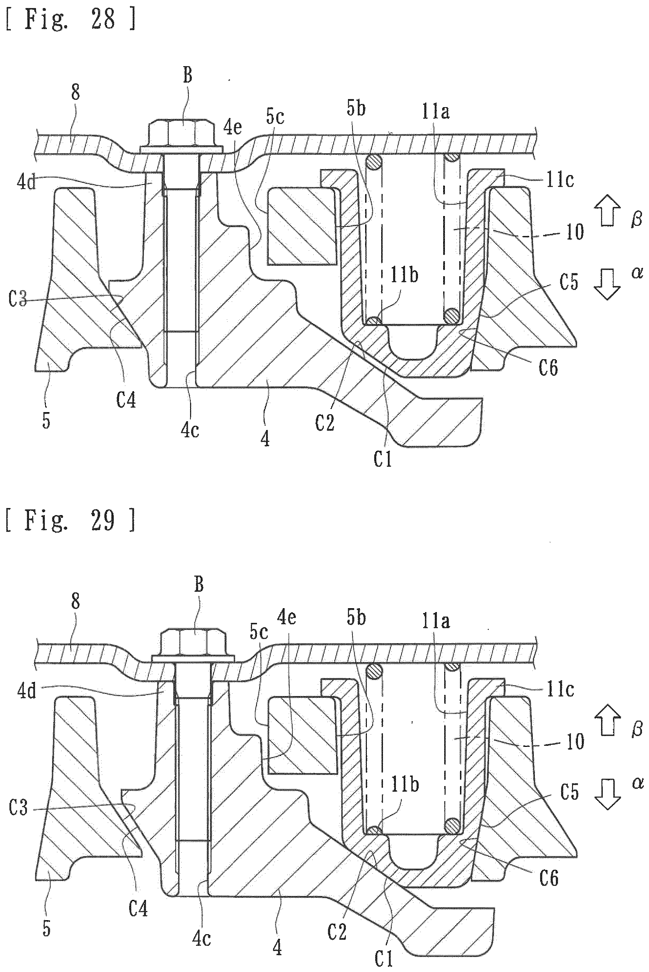

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 28 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4, the pressure member 5, and the receiving members 11 together, the first cam surfaces C1 formed in the bottom side surfaces of the receiving members 11 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the receiving members 11 are moved in the direction β in Fig. 29 by the cam function of the first cam surfaces C1 and the second cam surfaces C2 so as to reduce the urging force of the clutch springs 10 transmitted to the pressure member 5; and thereby the press-contact force between the drive-side clutch plates 6 and the driven-side clutch plates 7 is reduced.

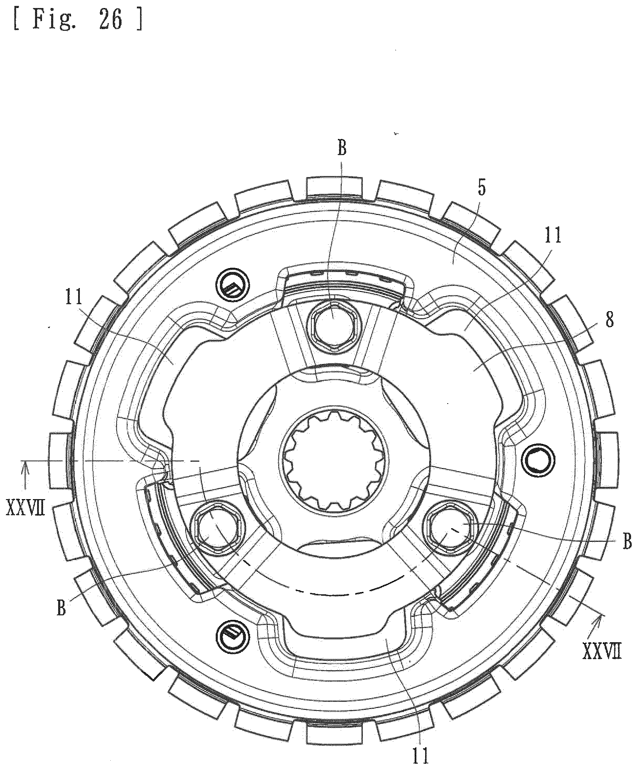

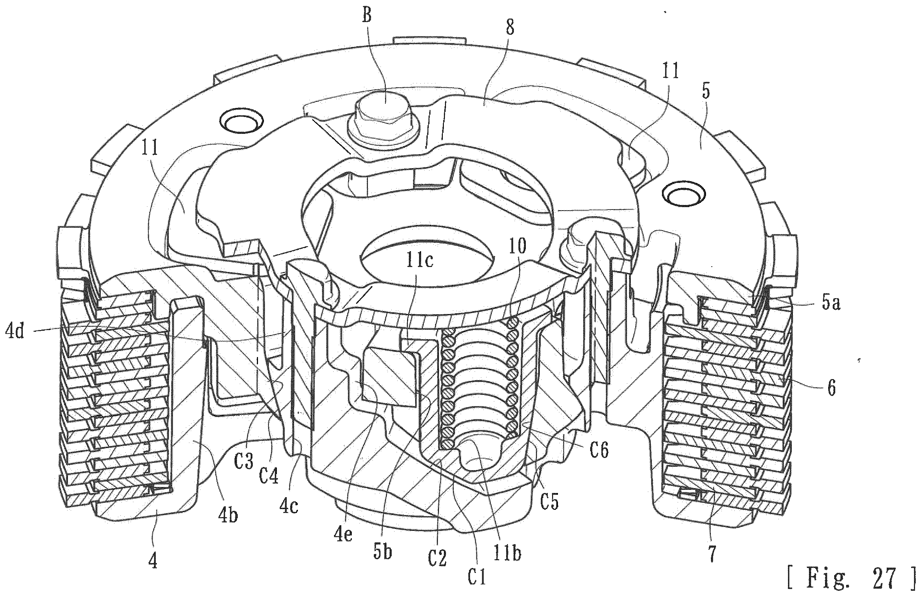

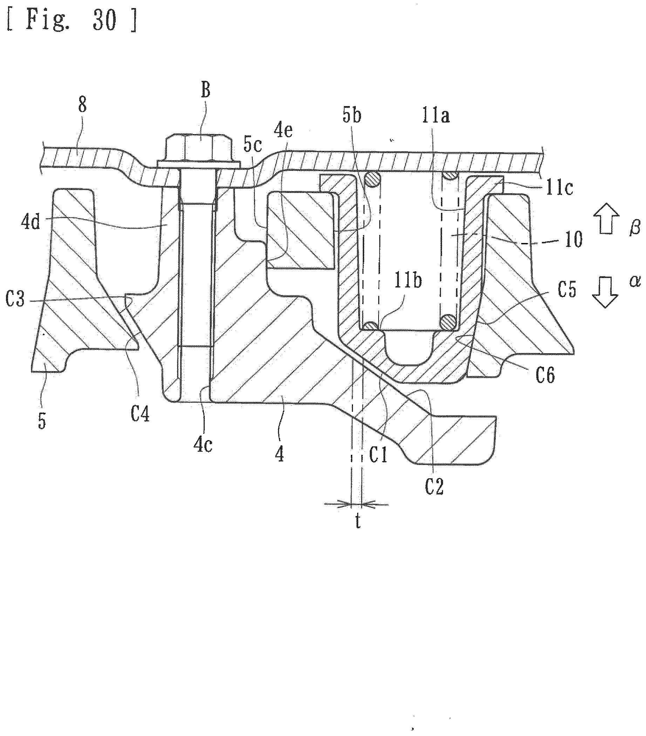

Here, as illustrated in Figs. 26 and 27 , a rotation restricting portion 4e is integrally formed in a predetermined part of the clutch member 4 according to the present embodiment. The rotation restricting portion 4e is capable of restricting rotation, relative to the clutch member 4, of the pressure member 5 that has moved due to activation of the push rod 9 and the pressed member E (activation means) and is capable of maintaining the clearance t (see Fig. 30 ) between a pair of cam surfaces (the first cam surface C1 and the second cam surface C2) that constitute the back-torque limiting cam. As illustrated in Fig. 27 , the rotation restricting portion 4e is formed by causing a predetermined part of the clutch member 4 (a predetermined part of the boss portion 4d in the present embodiment) to protrude in the rotation direction of the pressure member 5.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 30 , the pressure member 5 interferes with the rotation restricting portion 4e formed in the clutch member 4 and movement of the pressure member 5 in the direction is restricted, and the clearance t between the first cam surface C1 and the second cam surface C2, which constitute the back-torque limiting cam, is maintained. Thus, the rotation restricting portion 4e is configured to be capable of preventing the pressure member 5 from rotating and the receiving member 11 from becoming stuck onto the second cam surface C2 when the activation means (the push rod 9 and the pressed member E) are activated. A part that interferes with the rotation restricting portion 4e may be a separate and newly formed part of the pressure member 5.

The present embodiment includes the rotation restricting portion 4e that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Furthermore, the rotation restricting portion 4e according to the present embodiment is formed in a predetermined part of the clutch member 4, and the pressure member 5 that has moved due to activation of activation means (the push rod 9 and the pressed member E) interferes with the rotation restricting portion 4e formed in the clutch member 4 and restricts rotation of the pressure member 5. Therefore, by partially changing the shape of the clutch member 4, it is possible to restrict rotation of the pressure member 5 when a driver disengages the clutch, and it is possible to improve responsiveness when the driver subsequently engages the clutch and to improve operability.

Next, a power transmission device according to a fourth embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, and clutch springs 10 as urging means. Elements that are the same as those of the first embodiment will be denoted by the same numerals, and detailed descriptions of such elements will be omitted. However, the power transmission device according to the present embodiment does not have the receiving members 11 included in the first to third embodiments.

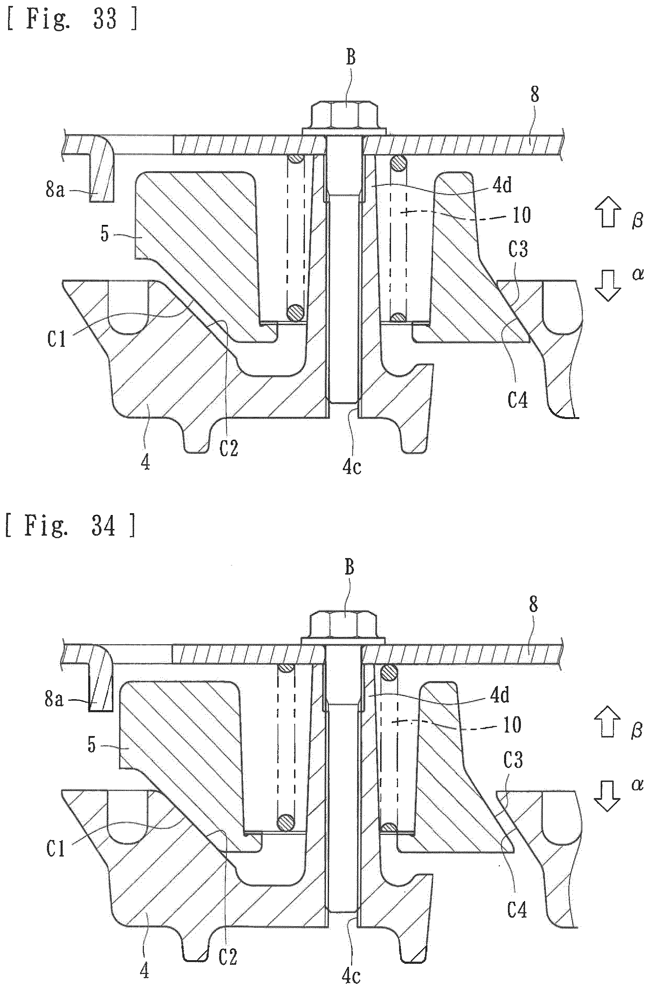

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 33 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4 and the pressure member 5 together, the first cam surfaces C1 formed in the pressure member 5 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the pressure member 5 is moved in the direction β in Fig. 34 by the cam function of the first cam surfaces C 1 and the second cam surfaces C2; and thereby the press-contact force between the drive-side clutch plates 6 and the driven-side clutch plates 7 is reduced.

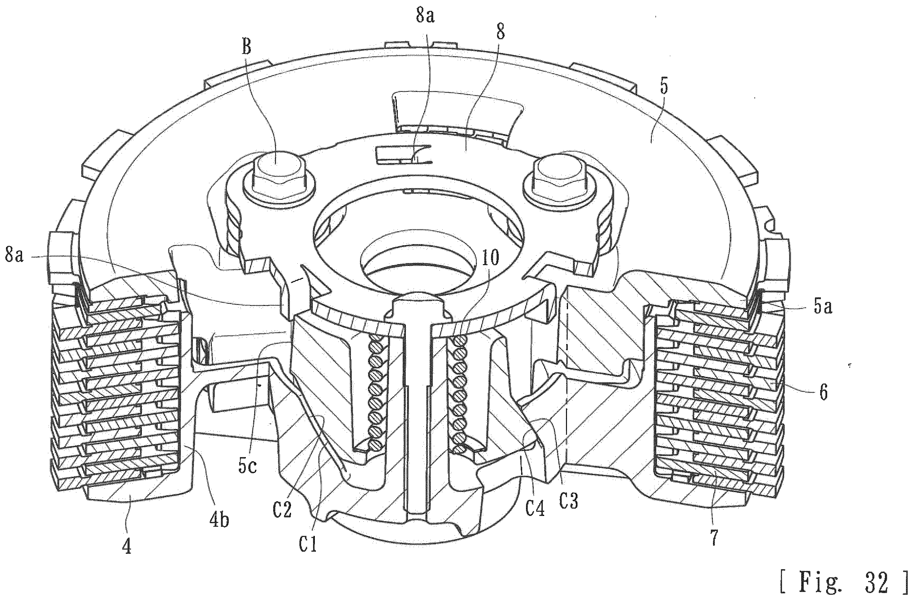

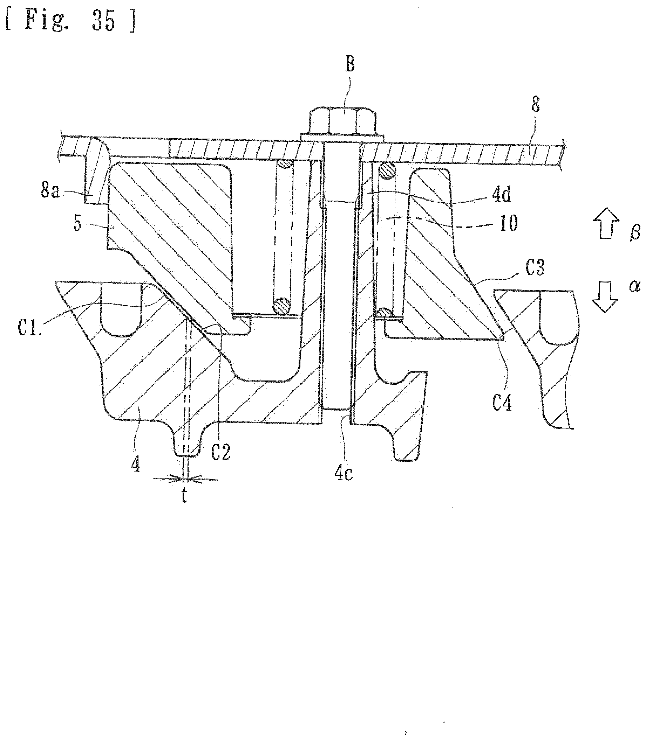

Here, as illustrated in Figs. 16 and 17 , a rotation restricting portion 8a is integrally formed in a predetermined part of the fixing member 8 according to the present embodiment. The rotation restricting portion 8a is capable of restricting rotation, relative to the clutch member 4, of the pressure member 5 that has moved due to activation of the push rod 9 and the pressed member E (activation means) and is capable of maintaining the clearance t (see Fig. 35 ) between a pair of cam surfaces (the first cam surface C1 and the second cam surface C2) that constitute the back-torque limiting cam. As illustrated in Fig. 32 , the rotation restricting portion 8a is formed by bending a predetermined part of the fixing member 8.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 35 , the pressure member 5 interferes with the rotation restricting portion 8a and movement of the pressure member 5 in the direction is restricted, and the clearance t between the first cam surface C1 and the second cam surface C2, which constitute the back-torque limiting cam, is maintained. Thus, the rotation restricting portion 8a is configured to be capable of preventing the pressure member 5 from rotating and the first cam surface C1 from becoming stuck onto the second cam surface C2 when the activation means (the push rod 9 and the pressed member E) are activated.

The present embodiment includes the rotation restricting portion 8a that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the rotation restricting portion 8a according to the present embodiment is formed in a predetermined part of the fixing member 8 (in particular, integrally formed by bending a predetermined part of the fixing member 8). Therefore, by performing replacement to the fixing member 8 having the rotation restricting portion 8a in an existing power transmission device, it is possible to restrict rotation of the pressure member 5 when a driver disengages the clutch, and it is possible to improve responsiveness when the driver subsequently engages the clutch and to improve operability.

The present invention is not limited to the embodiments described above. For example, the present invention may be applied to a power transmission device that does not have the press-contact assisting cam (the third cam surface C3 and the fourth cam surface C4). Even in this case, the power transmission device includes the rotation restricting portion (8a, 4e, 5e) that is capable of restricting rotation, relative to the clutch member 4 (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Thus, by restricting rotation of the pressure member 5 when a driver disengages the clutch, it is possible to improve responsiveness when the driver subsequently engages the clutch and to improve operability.

The number of receiving members 11 attached and the shape of each of the receiving members 11 are not limited. The present invention is applicable to a power transmission device that does not have a receiving member 11 as in the fourth embodiment. The power transmission device according to the present invention can be used as a multiple disc clutch for a motorcycle, an automobile, a three-wheeled or four-wheeled ATV, a general-purpose machine, or the like.

### Industrial Applicability

The present invention is applicable to any power transmission device that has a different outer shape or that has additional functions.

### Reference Signs List

- 1: gear (input member)
- 2: clutch housing
- 3: shaft (output member)
- 4: clutch member
- 4a: central hole
- 4b: outer peripheral wall
- 4c: bolt hole
- 4d: boss portion
- 4e: rotation restricting portion
- 5: pressure member
- 5a: flange portion
- 5b: attachment hole
- 5c: through-hole
- 5d: central hole
- 5e: rotation restricting portion
- 6: drive-side clutch plate
- 7: driven-side clutch plate
- 8: fixing member
- 8a: rotation restricting portion
- 9: push rod (activation means)
- 10: clutch spring (urging means)
- 11: receiving member
- 11a: recessed portion
- 11b: receiving portion
- 11c: flange portion
- C1: first cam surface
- C2: second cam surface
- C3: third cam surface
- C4: fourth cam surface
- C5: fifth cam surface
- C6: sixth cam surface

## Claims

1. A power transmission device comprising:
a clutch housing (2) that rotates together with rotation of an input member and to which a plurality of drive-side clutch plates (6) are attached;
a clutch member (4) to which a plurality of driven-side clutch plates (7) that are formed alternately with the drive-side clutch plates (6) of the clutch housing (2) are attached and to which an output member is coupled;
a pressure member (5) that is attached to the clutch member (4) and that is capable of pressing the drive-side clutch plates (6) and the driven-side clutch plates (7) against each other or releasing a press-contact force in accordance with movement thereof relative to the clutch member (4) in an axial direction;
urging means (10) that urges the pressure member (5) in a first direction such that the drive-side clutch plates (6) and the driven-side clutch plates (7) are pressed against each other;
fixing member (8) that is fixed to the clutch member (4) and to which the urging means (10) is attached;
a press-contact assisting cam that is constituted by a pair of cam surfaces that increase the press-contact force between the drive-side clutch plates (6) and the driven-side clutch plates (7) if the pressure member (5) and the clutch member (4) rotate relative to each other in a state a rotational power input to the input member becomes capable of being transmitted to the output member,
a back-torque limiting cam that is constituted by a pair of cam surfaces that reduce the press-contact force between the drive-side clutch plates (6) and the driven-side clutch plates (7) if the pressure member (5) and the clutch member (4) rotate relative to each other when a rotation speed of the output member exceeds a rotation speed of the input member,
wherein the power transmission device is capable of transmitting or cutting off rotational power that is input to the input member to the output member by pressing the drive-side clutch plates (6) and the driven-side clutch plates (7) against each other or releasing the press-contact force, and
the clutch member (4) includes
a clutch side cam portion including a clutch member assisting cam surface (C4) that is one of the pair of cam surfaces of the press-contact assisting cam and a clutch member limiting cam surface (C2) that is one of the pair of cam surfaces of the back-torque limiting cam, and
a boss portion (4d) to a tip end of which in a second direction the fixing member (8) is fixed, the second direction being opposite to the first direction **characterized in that**
the boss portion (4d) extends in the second direction from a surface of the clutch-side cam portion at a side of the second direction and is located between the clutch member assisting cam surface (C4) and the clutch member limiting cam surface (C2) in a circumferential direction of the clutch member (4).

2. The power transmission device according to claim 1, wherein the clutch member assisting cam surface (C4) and the clutch member limiting cam surface (C2) are formed in the clutch member at a side along the first direction from the tip end.

3. The power transmission device according to Claim 1, wherein with respect to the circumferential direction, when a direction from the boss portion (4d) toward the clutch member limiting cam surface (C2) is a first circumferential direction and a direction from the boss portion (4d) toward the clutch member assisting cam surface (C4) is a second circumferential direction, on the surface of the clutch-side cam portion at the side of the second direction, a circumferential distance from the boss portion (4d) to an edge of the clutch member limiting cam surface (C2) in the second circumferential direction is longer than a circumferential distance from the boss portion (4d) to an edge of the clutch member assisting cam surface (C4) in the second circumferential direction when viewed from an axial direction of the output member.

## Patentansprüche

1. Kraftübertragungsvorrichtung, umfassend:
ein Kupplungsgehäuse (2), das sich zusammen mit der Drehung eines Eingangselements dreht und an dem mehrere antriebsseitige Kupplungsscheiben (6) angebracht sind;
ein Kupplungselement (4), an dem mehrere abtriebsseitige Kupplungsscheiben (7), die abwechselnd mit den antriebsseitigen Kupplungsscheiben (6) des Kupplungsgehäuses (2) ausgebildet sind, angebracht sind und mit dem ein Ausgangselement gekoppelt ist;
ein Druckelement (5), das an dem Kupplungselement (4) angebracht ist und dazu in der Lage ist, die antriebsseitigen Kupplungsscheiben (6) und die abtriebsseitigen Kupplungsscheiben (7) gegeneinander anzupressen oder eine Anpresskraft entsprechend seiner Bewegung relativ zu dem Kupplungselement (4) in einer Axialrichtung aufzuheben;
Vorspannmittel (10), die das Druckelement (5) in einer ersten Richtung derart vorspannen, dass die antriebsseitigen Kupplungsscheiben (6) und die abtriebsseitigen Kupplungsscheiben (7) gegeneinander angepresst werden;
ein Befestigungselement (8), das an dem Kupplungselement (4) befestigt ist und an dem die Vorspannmittel (10) angebracht sind;
einen Anpressunterstützungsnocken, der durch ein Paar von Nockenflächen gebildet ist, die die Anpresskraft zwischen den antriebsseitigen Kupplungsscheiben (6) und den abtriebsseitigen Kupplungsscheiben (7) erhöhen, wenn sich das Druckelement (5) und das Kupplungselement (4) relativ zueinander in einem Zustand drehen, in dem eine in das Eingangselement eingegebene Drehleistung auf das Ausgangselement übertragbar wird;
einen Rückdrehmoment-Begrenzungsnocken, der durch ein Paar von Nockenflächen gebildet ist, die die Anpresskraft zwischen den antriebsseitigen Kupplungsscheiben (6) und den abtriebsseitigen Kupplungsscheiben (7) verringern, wenn sich das Druckelement (5) und das Kupplungselement (4) relativ zueinander drehen, wenn eine Drehzahl des Ausgangselements eine Drehzahl des Eingangselements überschreitet, wobei die Kraftübertragungsvorrichtung dazu in der Lage ist, in das Eingangselement eingegebene Drehleistung auf das Ausgangselement zu übertragen oder zu unterbrechen, indem die antriebsseitigen Kupplungsscheiben (6) und die abtriebsseitigen Kupplungsscheiben (7) gegeneinander angepresst werden oder die Anpresskraft aufgehoben wird, und
wobei das Kupplungselement (4) umfasst:
einen kupplungselementseitigen Nockenabschnitt, der eine Unterstützungsnockenfläche (C4) des Kupplungselements, die eine des Paars von Nockenflächen des Anpressunterstützungsnockens ist, und eine Begrenzungsnockenfläche (C2) des Kupplungselements, die eine des Paars von Nockenflächen des Rückdrehmoment-Begrenzungsnockens ist, umfasst, und
einen Ansatzabschnitt (4d), an dessen Spitzenende in einer zweiten Richtung das Befestigungselement (8) befestigt ist, wobei die zweite Richtung der ersten Richtung entgegengesetzt ist, **dadurch gekennzeichnet, dass**
sich der Ansatzabschnitt (4d) in der zweiten Richtung von einer Oberfläche des kupplungselementseitigen Nockenabschnitts auf einer Seite der zweiten Richtung erstreckt und in einer Umfangsrichtung des Kupplungselements (4) zwischen der Unterstützungsnockenfläche (C4) des Kupplungselements und der Begrenzungsnockenfläche (C2) des Kupplungselements angeordnet ist.

2. Kraftübertragungsvorrichtung nach Anspruch 1, wobei die Unterstützungsnockenfläche (C4) des Kupplungselements und die Begrenzungsnockenfläche (C2) des Kupplungselements in dem Kupplungselement auf einer Seite entlang der ersten Richtung von dem Spitzenende aus ausgebildet sind.

3. Kraftübertragungsvorrichtung nach Anspruch 1, wobei in Bezug auf die Umfangsrichtung, wenn eine Richtung von dem Ansatzabschnitt (4d) zu der Begrenzungsnockenfläche (C2) des Kupplungselements eine erste Umfangsrichtung ist und eine Richtung von dem Ansatzabschnitt (4d) zu der Unterstützungsnockenfläche (C4) des Kupplungselements eine zweite Umfangsrichtung ist, auf der Oberfläche des kupplungselementseitigen Nockenabschnitts auf der Seite der zweiten Richtung ein Umfangsabstand von dem Ansatzabschnitt (4d) zu einem Rand der Begrenzungsnockenfläche (C2) des Kupplungselements in der zweiten Umfangsrichtung länger ist als ein Umfangsabstand von dem Ansatzabschnitt (4d) zu einem Rand der Unterstützungsnockenfläche (C4) des Kupplungselements in der zweiten Umfangsrichtung, wenn in einer Axialrichtung des Ausgangselements betrachtet.

## Revendications

1. Dispositif de transmission de puissance comprenant :
un carter d'embrayage (2) qui tourne conjointement avec la rotation d'un élément d'entrée et auquel sont fixés plusieurs disques d'embrayage côté entraînement (6);
un élément d'embrayage (4) auquel sont fixés plusieurs disques d'embrayage côté entraîné (7), qui sont formés en alternance avec les disques d'embrayage côté entraînement (6) du carter d'embrayage (2), et auquel un élément de sortie est couplé;
un élément de pression (5) qui est fixé à l'élément d'embrayage (4) et qui est capable de presser les disques d'embrayage côté entraînement (6) et les disques d'embrayage côté entraîné (7) les uns contre les autres ou de libérer une force de contact sous pression en fonction de son déplacement par rapport à l'élément d'embrayage (4) dans une direction axiale;
un moyen de sollicitation (10) qui sollicite l'élément de pression (5) dans une première direction de telle sorte que les disques d'embrayage côté entraînement (6) et les disques d'embrayage côté entraîné (7) soient pressés les uns contre les autres;
un élément de fixation (8) qui est fixé à l'élément d'embrayage (4) et auquel le moyen de sollicitation (10) est fixé;
une came d'assistance au contact sous pression qui est constituée par une paire de surfaces de came qui augmentent la force de contact sous pression entre les disques d'embrayage côté entraînement (6) et les disques d'embrayage côté entraîné (7) si l'élément de pression (5) et l'élément d'embrayage (4) tournent l'un par rapport à l'autre dans un état dans lequel une puissance de rotation appliquée à l'élément d'entrée devient apte à être transmise à l'élément de sortie;
une came de limitation du couple inverse qui est constituée par une paire de surfaces de came qui réduisent la force de contact sous pression entre les disques d'embrayage côté entraînement (6) et les disques d'embrayage côté entraîné (7) si l'élément de pression (5) et l'élément d'embrayage (4) tournent l'un par rapport à l'autre lorsqu'une vitesse de rotation de l'élément de sortie dépasse une vitesse de rotation de l'élément d'entrée,
dans lequel le dispositif de transmission de puissance est capable de transmettre à l'élément de sortie ou de couper une puissance de rotation qui est appliquée à l'élément d'entrée en pressant les disques d'embrayage côté entraînement (6) et les disques d'embrayage côté entraîné (7) les uns contre les autres ou en libérant la force de contact sous pression, et
l'élément d'embrayage (4) comprend :
une partie de came côté élément d'embrayage comprenant une surface de came d'assistance (C4) de l'élément d'embrayage qui est l'une de la paire de surfaces de came de la came d'assistance au contact sous pression, et une surface de came de limitation (C2) de l'élément d'embrayage qui est l'une de la paire de surfaces de came de la came de limitation du couple inverse, et
une partie en bossage (4d), à une extrémité distale de laquelle, dans une deuxième direction, l'élément de fixation (8) est fixé, la deuxième direction étant opposée à la première direction, **caractérisé en ce que**
la partie en bossage (4d) s'étend dans la deuxième direction depuis une surface de la partie de came côté élément d'embrayage située du côté de la deuxième direction et est située entre la surface de came d'assistance (C4) de l'élément d'embrayage et la surface de came de limitation (C2) de l'élément d'embrayage dans une direction circonférentielle de l'élément d'embrayage (4).

2. Dispositif de transmission de puissance selon la revendication 1, dans lequel la surface de came d'assistance (C4) de l'élément d'embrayage et la surface de came de limitation (C2) de l'élément d'embrayage sont formées dans l'élément d'embrayage d'un côté suivant la première direction à partir de l'extrémité distale.

3. Dispositif de transmission de puissance selon la revendication 1, dans lequel, par rapport à la direction circonférentielle, lorsqu'une direction allant de la partie en bossage (4d) vers la surface de came de limitation (C2) de l'élément d'embrayage est une première direction circonférentielle et qu'une direction allant de la partie en bossage (4d) vers la surface de came d'assistance (C4) de l'élément d'embrayage est une deuxième direction circonférentielle, sur la surface de la partie de came côté élément d'embrayage située du côté de la deuxième direction, une distance circonférentielle entre la partie en bossage (4d) et un bord de la surface de came de limitation (C2) de l'élément d'embrayage dans la deuxième direction circonférentielle est supérieure à une distance circonférentielle entre la partie en bossage (4d) et un bord de la surface de came d'assistance (C4) de l'élément d'embrayage dans la deuxième direction circonférentielle, lorsqu'elle est vue selon une direction axiale de l'élément de sortie.
